# FASCICULE DE BREVET EUROPEEN

(11) **EP 1 101 689 B1**
(45) Date de publication et mention de la délivrance du brevet: **10.08.2011**
(21) Numéro de dépôt: 00403173.8
(22) Date de dépôt: 14.11.2000
(51) Int. Cl.: B62D 25/08

(54) **Face avant technique automobile sans radiateur**
Vorderfront eines Kraftfahrzeuges, ohne Radiator
Front end of an automobile, without radiator

(30) Priorité: 15.11.1999 FR 9914278
(43) Date de publication de la demande: 23.05.2001
(73) Titulaire: COMPAGNIE PLASTIC OMNIUM, 69007 Lyon (FR); Renault s.a.s., 92100 Boulogne Billancourt (FR); VALEO SYSTEMES THERMIQUES, 78320 Le Mesnil Saint-Denis (FR)
(72) Inventeur: Cheron, Hugues, 01800 Bourg Saint Christophe (FR); Decker, Laurent, 92100 Boulogne Billancourt (FR); Ghiringhelli, Bruno, 52200 Langres (FR); Liadouze, Alain, 78530 Buc (FR); Durbize, Marc, 78760 Jouars-Pont-De-Chartrain (FR)
(74) Mandataire: Remy, Vincent Noel Paul

(56) Documents cités:
- WO-A-99//21748
- DE-C- 4 336 030
- FR-A- 2 625 164
- FR-A- 2 754 235
- JP-A- 3 284 481
- JP-A- 63 103 770

## Description

La présente invention concerne une face avant technique de véhicule automobile.

On sait qu'une face avant technique de véhicule automobile est une structure qui se trouve en avant du bloc moteur et qui a pour fonction de supporter différents organes à l'avant du véhicule et principalement le radiateur du bloc moteur.

Une telle face avant technique présente l'intérêt qu'elle peut être pré-équipée en dehors de la chaîne de montage du véhicule et installée en une seule opération sur le véhicule.

Autour du radiateur, organe principal de la face avant technique, on trouve différents organes tels qu'une serrure ou des charnières de capot, des optiques, différents réservoirs ou encore des boîtiers électriques ou des calculateurs.

De manière traditionnelle, la structure de la face avant technique est déterminée par la présence du radiateur et des renforts, obtenus par surmoulage d'inserts métalliques ou par changement de matière. Ces renforts reportent sur les points de fixation de la face avant technique les contraintes dues à la présence du radiateur.

En d'autres termes, la face avant technique du véhicule automobile peut être considérée comme un support multiple qui organise, autour du radiateur, l'agencement de différents organes du véhicule.

Sur les véhicules dépourvus de face avant technique, les différents organes sont fixés successivement au châssis du véhicule, sur la chaîne de montage de ce dernier.

Sur certains de ces véhicules, les optiques sont néanmoins préalablement fixés à une traverse supérieure qui supporte la serrure du capot, mais le radiateur étant monté directement sur le châssis du véhicule, il n'existe aucune structure initialement séparée du véhicule qui pourrait supporter d'autres organes destinés à s'agencer autour du radiateur.

Il est donc ancré dans les habitudes des constructeurs automobiles que c'est la présence du radiateur et le souci de faire supporter ce radiateur par une structure initialement séparée du véhicule qui justifient la présence d'une face avant technique remplissant, de façon accessoire, la fonction supplémentaire de supporter d'autres organes agencés autour du radiateur.

La présente invention va à l'encontre de cette idée préconçue selon laquelle il est nécessaire d'avoir à supporter un radiateur pour prévoir une face avant technique sur un véhicule. De même, le document JP63103770 décrit un radiateur supporté par un chassis de véhicule automobile.

La présente invention a pour objet un ensemble telle que définie dans la revendication 1.

L'ensemble selon l'invention peut être utilisé avec un moteur qui supporte lui-même son radiateur, la face avant technique étant agencée autour du radiateur, sans le supporter, pour ne remplir que les fonctions dites accessoires des faces avant techniques traditionnelles qui consistent à supporter différents organes tels que notamment clignotants, antibrouillards, lave-projecteurs, répétiteurs latéraux, avertisseur, butée capot, joint de capot, ACC, bouclier, résonateur, bocal lave-vitres, BIM, détendeur GPL, filtre à gazole, calculateur, convergeant, carénage avant, prise d'air, alarme.

La face avant technique comporte un moyen de fixation du radiateur sur la traverse supérieure mais ce moyen de fixation n'assure qu'un positionnement relatif du radiateur sur la face avant technique, sans en supporter le poids.

Dans une variante préférée de ce mode de réalisation, le moyen de fixation est fusible et démontable.

Dans un mode de réalisation préféré, la traverse supérieure est une traverse hybride constituée par un profilé en alliage métallique renforcé par des nervures en matière plastique et les pièces-support sont réalisées en polypropylène renforcé par 30 % de fibres de verre longues (de l'ordre de 12 mm). La traverse inférieure est choisie en fonction du cahier des charges de tenue aux chocs du véhicule. Cette traverse incorporera de préférence des absorbeurs d'énergie de type boîtiers DANNER.

Les pièces-support sont avantageusement vissées sur la traverse supérieure.

Dans un mode de réalisation particulier de l'invention, les pièces-support qui sont montées aux extrémités de la traverse comportent des moyens de fixation aux longerons du véhicule.

Ainsi, les pièces-support forment des jambages qui rigidifient la traverse supérieure de par leur solidarisation aux longerons et augmentent l'inertie globale de la face avant technique.

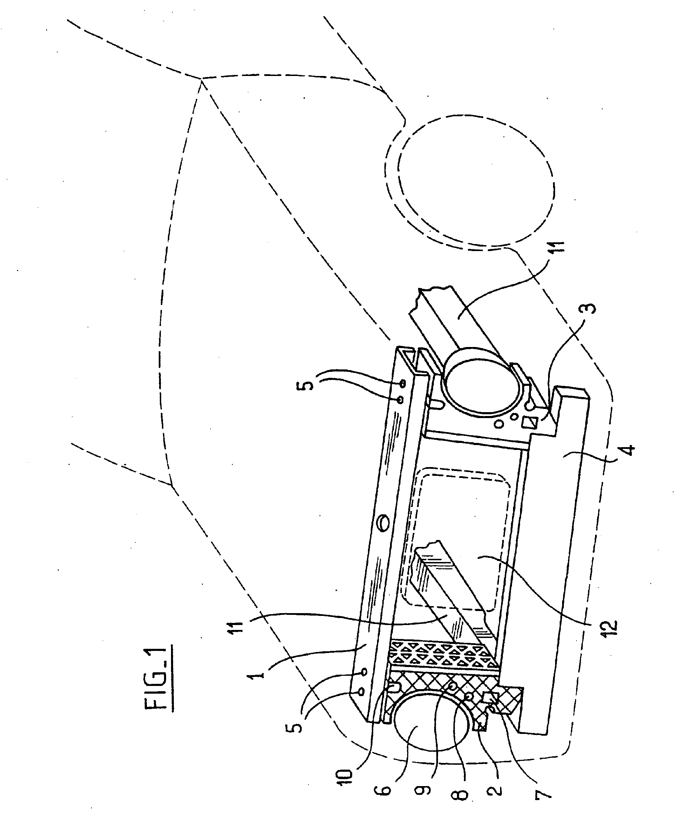

Dans le but de mieux faire comprendre l'invention, on va en décrire maintenant un mode de réalisation, donné à titre d'exemple non limitatif de la portée de l'invention, en référence à la figure unique annexée qui représente l'avant d'un véhicule automobile.

Sur cette figure, les contours du véhicule sont schématisés par des traits interrompus et seule la face avant technique ainsi que l'extrémité avant des longerons ont été représentés.

La face avant technique se compose d'une traverse supérieure 1, de deux pièces-support 2 et 3 montées chacune à une extrémité de la traverse supérieure 1 et d'une traverse inférieure 4.

La traverse supérieure est un profilé d'alliage métallique à section en U dont la rigidité a été améliorée par surmoulage de nervures en matière plastique (non représentées).

Au milieu de sa face supérieure, la traverse 1 comporte un orifice pour la fixation d'une serrure (non représentée) de capot.

Les pièces-support 2 et 3 sont assujetties à la traverse 1 par vissage au travers de perçages 5 prévus dans la traverse.

Chaque pièce-support est réalisée en matière plastique et comporte une pluralité de nervures qui ont pour fonction de rigidifier ladite pièce tout en l'allégeant.

Les nervures sont agencées en nid d'abeille.

Comme on le voit sur la figure, on prévoit de préférence deux réseaux de nervures ayant deux orientations différentes, l'une dans l'axe du véhicule, l'autre transversalement au véhicule afin d'obtenir des pièces-support de rigidité élevée.

Chaque pièce-support comporte une pluralité de logements pour recevoir des attaches de fixation ou des organes du véhicule.

Dans l'exemple représenté, chaque pièce-support reçoit un optique 6 et comporte, en face avant, des logements pour recevoir un clignotant (logement 7), un lave-projecteurs (logement 8), un bocal lave-vitres (logement 9) et une butée de capot (logement 10).

Sur leur face arrière non visible, les pièces-support peuvent également supporter un détendeur GPL, un avertisseur, un filtre et différents boîtiers électriques et électroniques du véhicule.

La partie inférieure de chaque pièce-support est agencée pour pouvoir se solidariser à un longeron 11 du véhicule.

Ainsi, en plus de ses fonctions de support d'organes, chaque pièce-support assure la rigidité de l'ensemble de la face avant technique en transmettant aux traverses supérieure et inférieure la rigidité des longerons 11 du véhicule.

La traverse inférieure est une traverse de chocs qui appartient au système d'absorption d'énergie du véhicule.

Cette traverse s'appuie également, par l'intermédiaire de chaque pièce support, sur les longerons 11 et peut intégrer ou supporter des absorbeurs DANNER.

En partie centrale de la face avant technique, on a représenté, en traits interrompus, un radiateur 12 qui est monté sur le véhicule indépendamment de la face avant technique en étant, par exemple, supporté par le bloc moteur.

Ce radiateur trouve sa place dans la face avant technique, comme dans les faces avant traditionnelles, à la différence près qu'il n'est aucunement supporté par la face avant technique selon l'invention.

Les différents organes supportés par la face avant technique sont réunis sur les pièces-support latérales qui peuvent, dans d'autres réalisations non illustrées, occuper un plus grand volume en comportant par exemple un retour latéral, couvrant également les flancs de l'avant du véhicule.

Il est bien entendu que le mode de réalisation qui vient d'être décrit ne présente aucun caractère limitatif et qu'il pourra recevoir toute modification désirable, dans le cadre de l'invention telle que définie par les revendications.

## Revendications

1. Ensemble d'une face avant technique de véhicule automobile et d'un radiateur, la face avant technique comprenant au moins une traverse supérieure (1) apte à supporter les charnières ou la serrure du capot moteur du véhicule, une pièce-support (2, 3) à chaque extrémité de la traverse, chaque pièce-support étant apte à recevoir au moins un bloc optique du véhicule (6), une traverse inférieure (4) s'étendant d'une pièce-support à l'autre et appartenant au système d'absorption d'énergie du véhicule et un évidement situé entre les deux traverses et les deux pièces-support et laissant la place à un radiateur (12), le radiateur n'étant pas supporté par la face avant technique et étant supporté par des moyens extérieurs à la face avant technique, **caractérisé par le fait que** la face avant technique remplit une fonction de support de bouclier,
et **par le fait qu'**elle comporte un moyen de fixation du radiateur sur la traverse supérieure (1), ce moyen de fixation n'assurant qu'un positionnement relatif du radiateur sur la face avant technique, sans en supporter le poids.

2. Ensemble selon la revendication 1, **caractérisé par le fait que** le moyen de fixation est fusible et démontable.

3. Ensemble selon l'une quelconque des revendications 1 à 2 **caractérisé par le fait que** la traverse supérieure (1) est une traverse hybride constituée par un profilé en alliage métallique renforcé par des nervures en matière plastique.

4. Ensemble selon l'une quelconque des revendications 1 à 3, **caractérisé par le fait que** les pièces-support (2, 3) sont réalisées en polypropylène renforcé par 30 % de fibres de verre longues.

5. Ensemble selon l'une quelconque des revendications 1 à 4, **caractérisé par le fait que** les pièces-support (2, 3) sont vissées sur la traverse supérieure

6. Ensemble selon l'une quelconque des revendications 1 à 5, **caractérisé par le fait que** les pièces-support (2, 3) comportent des moyens de fixation aux longerons (11) du véhicule.

7. Ensemble selon l'une quelconque des revendications précédentes, comprenant en outre les moyens de support du radiateur.

8. Ensemble selon l'une quelconque des revendications précédentes, comprenant en outre un moteur, dans lequel le moteur supporte lui-même le radiateur.

## Claims

1. Set of a motor vehicle front end carrier and of a radiator, the front end carrier comprising at least one upper crossmember (1) capable of supporting the hinges or the catch for the vehicle bonnet, a support piece (2, 3) at each end of the crossmember, each support piece being capable of taking at least one lighting unit (6) of the vehicle, a lower crossmember (4) extending from one support piece to the other and belonging to the vehicle energy-absorption system, and a cavity located between the two crossmembers and the two support pieces and leaving space for a radiator (12), the radiator being not supported by the front end carrier and being supported by means external to the front end carrier, **characterized in that** the front end carrier has a function to support a shield, and **in that** it comprises a means for fixing the radiator to the upper crossmember (1), this fixing means providing only relative positioning of the radiator on the functional front end, without taking its weight.

2. Set according to claim 1, **characterized in that** the fixing means is meltable and demountable.

3. Set according to any one of claims 1 to 2, **characterized in that** the upper crossmember (1) is a hybrid crossmember consisting of a metal alloy section piece reinforced with plastic ribs.

4. Set according to any one of claims 1 to 3, **characterized in that** the support pieces (2, 3) are made of polypropylene strengthened with 30% long glass fibres.

5. Set according to any one of claims 1 to 4, **characterized in that** the support pieces (2, 3) are screwed to the upper crossmember (1).

6. Set according to any one of claims 1 to 5, **characterized in that** the support pieces (2, 3) comprise means of fixing to the longerons (11) of the vehicle.

7. Set according to any one of previous claims also including the means for supporting that radior.

8. Set according to any one of previous claims, also including a motor, wherein the motor supports itself the radiator.

## Patentansprüche

1. Anordnung einer technischen Vorderfront eines Kraftfahrzeugs und eines Gebläses, wobei die technische Vorderfront mindestens eine obere Traverse (1), die dazu dient, die Scharniere oder das Schloss der Motorhaube zu tragen, ein Haltestück (2, 3) an jedem Ende der Traverse, wobei jedes Haltestück dazu dient, mindestens ein Beleuchtungsmodul des Fahrzeugs (6) aufzunehmen, eine untere Traverse (4), die sich von einem Haltestück zum anderen erstreckt und Teil des Energie-Absorptionssystem des Fahrzeugs darstellt, und eine zwischen den beiden Traversen und den beiden Haltestücken angeordnete Aussparung umfasst, so dass ein Raum für ein Gebläse (12) verfügbar ist, wobei das Gebläse nicht von der technischen Vorderfront, sondern von äußeren Mitteln an der technischen Vorderfont getragen wird, **dadurch gekennzeichnet, dass** die technische Vorderfront eine Funktion der Halterung eines Schutzschildes **dadurch** erfüllt, dass sie ein Mittel zum Befestigen des Gebläses auf der oberen Traverse (1) aufweist, wobei dieses Befestigungsmittel lediglich eine Positionierung des Gebläses bezüglich der technischen Vorderfront zulässt, ohne dessen Gewicht zu tragen.

2. Anordnung nach Anspruch 1, **dadurch gekennzeichnet, dass** das Befestigungsmittel eine Sollbruchstelle aufweist und demontierbar ist.

3. Anordnung nach einem der Ansprüche 1 und 2, **dadurch gekennzeichnet, dass** es sich bei der oberen Traverse (1) um eine Hybridtraverse handelt, die aus einem Profilmaterial einer Metalllegierung besteht, das durch Rippen aus Kunststoff verstärkt wird.

4. Anordnung nach einem der Ansprüche 1 bis 3, **dadurch gekennzeichnet, dass** die Haltestücke (2, 3) aus Polypropylen hergestellt werden, das zu 30 % durch Glas-Langfasern verstärkt wurde.

5. Anordnung nach einem der Ansprüche 1 bis 4, **dadurch gekennzeichnet, dass** die Haltestücke (2, 3) auf der oberen Traverse (1) aufgeschraubt werden.

6. Anordnung nach einem der Ansprüche 1 bis 5, **dadurch gekennzeichnet, dass** die Haltestücke (2, 3) Mittel zum Befestigen an den Längsträgern (11) des Fahrzeugs aufweisen.

7. Anordnung nach einem der vorhergehenden Ansprüche, die außerdem die Haltemittel des Gebläses aufweist.

8. Anordnung nach einem der vorhergehenden Ansprüche, die außerdem einen Motor aufweist, in welchem der Motor selbst das Gebläse trägt.
